# EUROPÄISCHE PATENTANMELDUNG

(11) **EP 3 733 030 A1**
(43) Veröffentlichungstag der Anmeldung: **04.11.2020**
(21) Anmeldenummer: 20171506.7
(22) Anmeldetag: 27.04.2020
(51) Int. Cl.: A47J 31/52

(54) **VERFAHREN ZUR STEUERUNG EINES HEISSGETRÄNKEAUTOMATEN**

(30) Priorität: 03.05.2019 DE 102019206399
(71) Anmelder: BSH Hausgeräte GmbH, 81739 München (DE)
(72) Erfinder: Speckbacher, Benedikt, 83339 Chieming (DE); Nerbl, Christian, 83512 Wasserburg am Inn (DE); Palierakis, Sandro, 83059 Kolbermoor (DE)

(57) **Zusammenfassung**

Die Erfindung betrifft ein Verfahren zur Steuerung eines Heißgetränkeautomaten (1), umfassend die Schritte:
- Auswahl eines Heißgetränketyps (H),
- Zubereitung eines Heißgetränks basierend auf dieser Auswahl,
wobei während eines aktuellen Zubereitungsschritts (Z1) basierend auf der Auswahl ermittelt wird, welches der nachfolgende Zubereitungsschritt (Z2) sein wird und der aktuelle Zubereitungsschritt (Z1) mit einer Übergangsprozedur (P) beendet wird, die basierend auf dem nachfolgenden Zubereitungsschritt (Z2) ermittelt wird.

Die Erfindung betrifft des Weiteren einen entsprechenden Heißgetränkeautomaten.

## Beschreibung

Die Erfindung betrifft ein Verfahren zur Steuerung eines Heißgetränkeautomaten, und einen solcherart gesteuerten Heißgetränkeautomaten. Die Erfindung betrifft dabei insbesondere einen Kaffeeautomaten. Bevorzugt dient diese Erfindung zur Verbesserung von Heißgetränkeautomaten mit einem Durchlauferhitzer.

Die DE 10 2013 212 349 A1 beschreibt einen Kaffeevollautomat mit einer elektronischen Speichereinrichtung, in der Brühprogramme mit brühprogrammspezifischen Kenngrößen und Systemeinstellungen mit systemspezifischen Kenngrößen hinterlegt sind, und mit einer Eingabeeinrichtung zum An- bzw. Auswählen eines Brühprogramms, einer brühprogrammspezifischen Kenngröße, einer Systemeinstellung und einer systemspezifischen Kenngröße, der dadurch gekennzeichnet ist, dass durch die Auswahl einer bestimmten systemspezifischen Kenngröße in einer Systemeinstellung auf zumindest ein dieser Kenngröße zugeordnetes Brühprogramm oder auf zumindest einen dieser Kenngröße zugeordneten Satz an Brühprogrammen zugegriffen wird.

Nachteil des Standes der Technik ist, dass sich der Heißgetränkeautomat zu Anfang eines Brühprozesses, aber zuweilen auch zwischen Teilprozessen in einem undefinierten Zustand befindet.

Der Erfindung liegt die Aufgabe zugrunde, ein verbessertes Verfahren sowie einen verbesserten Heißgetränkeautomaten anzugeben und insbesondere klar definierte Zustände zwischen Zubereitungsprozessen oder zwischen Teilprozessen bei einer Getränkezubereitung zu erreichen.

Die Erfindung löst diese Aufgabe mittels der Gegenstände der unabhängigen Ansprüche. Die Unteransprüche geben bevorzugte Ausführungsformen wieder.

Bekannte Heißgetränkeautomaten hatten bisher keine Möglichkeit zwischen Teilprozessen einer Zubereitung den aktuellen Systemzustand klar zu definieren. Beispielsweise wurde bisher nach jedem Prozessschritt entweder gekühlt, oder es wurde gar nichts gemacht. Die Prozesse wurden in einem undefinierten Zustand beendet. Beim Kühlen nach den Prozessen muss bei einem Folgeprozess zuweilen die Energie wieder zugeführt werden, was Energie und Zeit kostet. Bei den Systemen bei denen nichts gemacht wurde, führte das "nicht kühlen" dazu, dass nach Beenden des Prozesses die Restenergie in der Heizung das vorhandene Wasser verdampfen lies. Damit hatte man für den nächsten Prozess je nach Länge der Zeit bis zur nächsten Zubereitung undefinierte Ausgangssituationen im gesamten Fluidsystem, was sich in Schwankungen der ausgegebenen Getränkemenge, der Tassentemperatur und der Getränkequalität niederschlug. Zudem bergen undefinierte Ausgangssituationen eine Gefahr für die Sicherheit bzw. die Lebensdauer sämtlicher Module eines Heißgetränkeautomaten.

Das erfindungsgemäße Verfahren dient zur Steuerung eines Heißgetränkeautomaten. Die Erfindung richtet sind sich dabei auf Heißgetränkeautomaten (insbesondere Kaffeeautomaten), die ein Heizelement zur Aufheizung von Wasser umfassen, insbesondere einen Durchlauferhitzer. Besonders bevorzugt richtet sich die Erfindung auf einen Kaffeevollautomaten mir einem Mahlwerk, damit ein ausgewähltes Kaffeegetränk aus frisch gemahlenem Kaffeepulver zubereitet werden kann.

Das Verfahren umfasst die folgenden Schritte:

### - Auswahl eines Heißgetränketys

Dabei wählt ein Benutzer auf an sich bekannte Weise einen Getränketyp aus einer Vielzahl unterschiedlicher Heißgetränketypen, die der Heißgetränkeautomat anbietet. Ein bevorzugtes Beispiel ist ein Kaffeevollautomat. Unter "Heißgetränketyp" wird eine Art von heißem Getränk (z.B. Brühe, Kaffee, Tee) verstanden, welche sich von anderen Getränken aufgrund mindestens eines Parameters unterscheidet. Unterschiedsparameter beschränken sich nicht nur auf die Getränkeart allein, bei Kaffee z.B. "Espresso", "Cappuccino", "Café Crema", sondern können auch auf die Getränkegröße (klein, mittel groß) oder auf andere Parameter wie z.B. die Getränkestärke, Temperatur, oder den Anteil von anderen Komponenten wie z.B. Milch oder Süßungsmittel bezogen sein.

### - Zubereitung eines Heißgetränks basierend auf dieser Auswahl

Eine Zubereitung ist im Grunde bekannt. Erfindungsgemäß wird vor oder während eines aktuellen Zubereitungsschritts basierend auf der Auswahl ermittelt, welches der nachfolgende Zubereitungsschritt sein wird. Der aktuelle Zubereitungsschritt wird daraufhin mit einer Übergangsprozedur beendet, die basierend auf dem nachfolgenden Zubereitungsschritt ermittelt wird.

Ein Zubereitungsschritt stellt einen Teilabschnitt einer Zubereitung dar. Beispielsweise kann ein Zubereitungsschritt ein Vorbrühen, ein Hauptbrühen, ein Vorwärme von Flüssigkeiten, ein Mahlvorgang zur Herstellung von Kaffeepulver, Abfüllen eines Pulvers zur Getränkezubereitung in eine Brüheinheit, Säuberung bzw. Entleerung von Elementen des Heißgetränkeautomaten oder Vorbereiten sowie ein Abschluss einer Zubereitung sein.

Die Bezeichnungen "aktuell" und "nachfolgend" dienen der Unterscheidung zweier zeitlich direkt aufeinander folgender Zubereitungsschritte. Der aktuelle Zubereitungsschritt ist stets der zeitlich erste und der nachfolgende Zubereitungsschritt stets der zeitlich zweite Zubereitungsschritt, der direkt auf den aktuellen Zubereitungsschritt folgt, wobei erfindungsgemäß auch eine Wartezeit als Zubereitungsschritt angesehen werden kann.

Mit den Übergangsprozeduren, die auch als "Endoptionen" bezeichnet werden können, da sie einen Zubereitungsschritt abschließen, können verschiedene Enden von Zubereitungsschritten definiert werden und bei einer entsprechenden Wahl der Übergangsprozedur auchdie Zeit zwischen zwei Zubereitungsschritten optimal genutzt werden. Es ist diesbezüglich bevorzugt, dass die Übergangsprozeduren so beschaffen sind, dass sie optimale Ausgangsbedingungen für den nachfolgenden Zubereitungsschritt bieten. Dazu sollte ermittelt werden, welche Parameterwerte zu Beginn des nachfolgenden Zubereitungsschrittes vorliegen müssen und die Übergangsprozedur so gewählt bzw. angepasst werden, dass sie den Endzustand des aktuellen Zubereitungsschrittes in die Startvoraussetzungen des nachfolgenden Zubereitungsschrittes überführt. Beispielsweise sollte bei Abschluss eines aktuellen Zubereitungsschrittes mit einer ersten Temperatur bei einem nachfolgenden Zubereitungsschritt, welcher eine zweite Temperatur benötigt, die Übergangsprozedur so gestaltet sein, dass die Temperatur so gesteuert wird, dass ausgehend von der ersten Temperatur durch Erhitzen oder durch Kühlen die zweite Temperatur erreicht wird.

Die Einfügung von stabilisierenden Übergängen zwischen Prozessen bzw. Teilprozessen tragen zur zeitlichen und qualitativen Optimierung bei der Kaffeezubereitung bei.

Gemäß einer bevorzugten Ausführungsform umfasst die Übergangsprozedur eine Anzahl von Verfahrensschritten zur Steuerung des Heißgetränkeautomaten. Ein solcher Verfahrensschritt kann z.B. das Anschalten eines Heizelements mit einer gewissen Leistung für eine gewisse Zeit für eine Temperaturänderung darstellen. Da die Komponenten eines Heißgetränkeautomaten über Parameter angesprochen werden können, betreffen die Verfahrensschritte bevorzugt Änderungen von Parametern durch die Zuordnung von Parameterwerten. Beispielsweise wäre ein Parameter im vorangehenden Beispiel die Heizleistung, dem für eine bestimmte Zeit ein bestimmter Parameterwert zugeordnet wird. Die Parameterwerte dieser Parameter, bzw. die Verfahrensschritte, können dabei vorbestimmt sein, also z.B. eine Erwärmung von einer ersten vorgegebenen Temperatur auf eine zweite vorgegebene Temperatur mit einer fest vorgegebenen Heizleistung bedingen.Sie können aber auch dynamisch basierend auf dem nachfolgenden Zubereitungsschritt und/oder basierend auf Messwerten von Sensoren des Heißgetränkeautomaten berechnet werden. Beispielsweise kann der Parameter eine Heizleistung zur Erwärmung von einer ersten Temperatur auf eine zweite Temperatur darstellen, wobei die erste Temperatur durch die aktuell gemessene Temperatur festgelegt wird, die zweite Temperatur durch die Starttemperatur des nachfolgenden Zubereitungsschritts darstellt und die Heizleistung daraus berechnet wird. Bevorzugt betrifft also ein Parameter der Übergangsprozedur einen Parameter, welcher eine Änderung im Heißgetränkeautomaten hervorruft und bevorzugt aus Startparameterwerten des nachfolgenden Zubereitungsschritts und aus bestimmungsgemäßen Endparametern des aktuellen Zubereitungsschritts oder aus entsprechenden Messwerten berechnet wird.

Es ist dabei bevorzugt, dass die Übergangsprozedur aus einer Anzahl von Übergangsprozeduren mit vorgegebenen Abläufen von Änderungen von Parameterwerten ausgewählt wird, wobei bevorzugt für einen Zubereitungsschritt eine vorgegebene Menge von Übergangsprozeduren vorgesehen ist. Solche Übergangsprozeduren umfassen bevorzugt einen vorgegebenen Ablauf mit einer festen Reihenfolge von Änderungen von Parameterwerten, wobei diese Parameterwerte wie vorangehend beschrieben vorgegeben sein können und/oder dynamisch ermittelt werden können. Diese Ausführungsform betrifft vor allem komplexere Vorgänge als das vorangehend beschriebene Beispiel, bei dem lediglich die Temperatur geändert worden ist. Diese Übergangsprozeduren umfassen einen komplexeren Ablauf, der beispielsweise neben einer Temperaturänderung eine Förderung von Flüssigkeit, eine Vorbereitung von Getränkepulver oder eine Säuberung von Komponenten umfasst. Es ist hier gemeint, dass die relative Reihenfolge der Schritte innerhalb einer Übergangsprozedur bevorzugt fest vorgegeben ist, jedoch die Parameterwerte der Parameter der einzelnen Schritte, und insbesondere auch die Applikationszeiten, bevorzugt dynamisch angepasst werden können.

Gemäß einer bevorzugten Ausführungsform umfasst eine Übergangsprozedur Parameter der Gruppe Temperatur (z.B. Zieltemperatur zum Erwärmen oder Kühlen), Leistung eines Heizelements, Leistung einer Pumpe (z.B. für den Fluss während des Kühlens), Fördervolumen einer Flüssigkeit (z.B. von Kühlwasser), Ventilstellungen, Stellung eines mechanischen Schaltelements, Steuerung von Bewegungselementen, Zeit eines vorzeitigen Ausschaltens des Heizelements ("Heater-Early-Off-Time") und Messwertanforderungen von Sensoren.

Die "Heater-Early-Off-Time" betrifft den Fall, dass während des Hauptteils der Getränkezubereitung, also während des Bezugs des Heißgetränks, die Heizung vorzeitig ausgeschaltet wird, um die im Bereich des Heizelements und der Zuleitungen gespeicherte Restenergie zu nutzen und den Heißgetränkeautomaten auf das Ende der Zubereitung vorzubereiten. Dies kann beispielsweise für einen Kaffeeautomaten sowohl auf den Bezug von Kaffee als auch Heißwasser oder Dampf angewendet werden. Je nach Größe und daraus resultierender Länge des Heißgetränks speichert sich immer mehr Energie im Bereich des Heizelements und der Zuleitungen. Bei einer bevorzugten Übergangsprozedur ist die Heater-Early-Off-Time bevorzugt bei kürzeren Zubereitungszeiten (z.B. kleineren Getränken) kürzer als bei längeren (z.B. größeren Getränken). Es ist besonders bevorzugt, dass bei einer höheren Temperatur im nachfolgenden Zubereitungsschritt im Rahmen der Übergangsprozedur die Heater-Early-Off-Time kleiner dimensioniert wird, um weniger Wärmeenergie aus dem System zu entnehmen.

Gemäß einer bevorzugten Ausführungsform stehen Übergangsprozeduren für aufeinander folgende Zubereitungsschritte zur Verfügung. Die Zubereitungsschritte können beispielsweise unterschiedliche Brühschritte, einen Brühschritt gefolgt von einer Heißwasser- oder Dampfzubereitung, eine Heißwasser- oder Dampfzubereitung gefolgt von einem Brühschritt oder den Abschluss einer Zubereitung darstellen.

Gemäß einer bevorzugten Ausführungsform umfasst eine Übergangsprozedur Parameterwerte zur Steuerung eines mechanischen Schaltelements. Das mechanische Schaltelement kann z.B. ein Stößelrad, insbesondere ein Zahnrad sein, mit dem elektrische Schalter bedient oder Ventilstellungen gesteuert werden sowie ggf. die Bewegung einer Brüheinheit. Ein alternatives mechanisches Schaltelement kann ein Schieber sein, durch dessen Bewegung Schaltvorgänge durchgeführt werden. Das mechanische Schaltelement wird durch Angaben der Übergangsprozedur zur Durchführung mechanischer und/oder elektrischer Schaltvorgänge im Heißgetränkeautomaten entsprechend angesteuert. Diese Ausführungsform hat den Vorteil, dass durch die Übergangsprozedur ein Zustand vermieden werden kann, in dem das mechanische Schaltelement zu früh in einen Zustand verbracht wird, in dem es nur noch in einer einzigen Richtung verfahren werden kann. Die Erfindung trägt besonders vorteilhaft zur Lebensdauer eines mechanischen Schaltelements bei, bei dem solch ein "irreversibler" Zustand auftreten kann. Ein solches mechanisches Schaltelement ist bis zu einer bestimmten Stellung in beide Richtungen verfahrbar und ab dieser Stellung nur noch in einer Richtung. Eine Übergangsprozedur ist bevorzugt so gestaltet, dass sie dafür sorgt, dass ein solches mechanisches Schaltelement nicht zu früh, z.B. im Rahmen einer Bewegung während einer Übergangsphase in einen nicht rückführbaren Zustand verfahren wird. Bevorzugt erreicht die Erfindung mit einer entsprechenden Auswahl und Gestaltung der Übergangsprozedur, dass Schaltzyklen des mechanischen Schaltelements gespart werden. Dies erhöht die Lebensdauer nicht nur des mechanischen Schaltelements, sondern auch von anderen Komponenten wie z.B. Ventilen oder Schaltern.

Ein erfindungsgemäßer Heißgetränkeautomat umfasst die folgenden Komponenten:
- Eine Auswahleinheit ausgelegt zur benutzerseitigen Auswahl und Angabe eines Heißgetränketyps.
- Eine Ermittlungseinheit, die dazu ausgelegt ist, vor oder während eines aktuellen Zubereitungsschritts basierend auf der Auswahl zu ermitteln, welches der nachfolgende Zubereitungsschritt sein wird, und eine Übergangsprozedur basierend auf dem nachfolgenden Zubereitungsschritt zu ermitteln.
- Eine Steuereinrichtung zur Steuerung der Zubereitung von Heißgetränken basierend auf der Auswahl, die dazu ausgelegt ist, einen aktuellen Zubereitungsschritt mit der ermittelten Übergangsprozedur zu beenden.

Bevorzugt umfasst der Heißgetränkeautomat einen Datenspeicher, der Daten zu einer Anzahl von Übergangsprozeduren mit vorgegebenen Parametern enthält. Zusätzlich kann der Datenspeicher vorbestimmte Parameterwerte zu einer Anzahl der Übergangsprozeduren umfassen. Dies hat den Vorteil, dass die Übergangsprozeduren sehr einfach in den Ablauf einer Getränkezubereitung integriert werden können.

Bevorzugt umfasst der Heißgetränkeautomat eine Recheneinheit, z.B. einen Prozessor, die bzw. der dazu ausgelegt ist, eine Übergangsprozedur in Abhängigkeit eines aktuellen Zubereitungsschritts und eines nachfolgenden Zubereitungsschritts zu ermitteln. Je nach Art der Ausführungsform ist die Recheneinheit bevorzugt dazu ausgestaltet, Parameterwerte der ermittelten Übergangsprozedur in Abhängigkeit von Messwerten von Sensoren des Heißgetränkeautomaten dynamisch anzupassen. Insbesondere ist die Recheneinheit zu einer Anpassung ausgelegt, wie sie weiter oben im Rahmen des Verfahrens beschrieben worden ist. Dazu kann die Recheneinheit bevorzugt ermitteln, welche Parameterwerte zu Beginn des nachfolgenden Zubereitungsschrittes vorliegen müssen und welche Zustände am Ende eines aktuellen Zubereitungsschritts vorliegen. Die Parameterwerte werden dann so berechnet, dass die Übergangsprozedur den Endzustand des aktuellen Zubereitungsschrittes in die Startvoraussetzungen des nachfolgenden Zubereitungsschrittes überführt. Dies hat den Vorteil, dass automatisch optimale Ausgangsbedingungen für den nachfolgenden Zubereitungsschritt hergestellt werden können.

Bevorzugt ist der Heißgetränkeautomat ein Kaffeeautomat, insbesondere mit einem Durchlauferhitzer, und zur Ausführung eines erfindungsgemäßen Verfahrens ausgelegt.

Vorteile der Erfindung sind, dass eine höhere Prozessstabilität erreicht werden kann, insbesondere im Hinblick auf Füllmengen und Temperatur, eine stabilere Kaffeequalität über eine Serie von Brühungen erreicht, Energie gespart wird und trotzdem schnellere Bezugszeiten möglich sind und nicht zuletzt ein Schutz von Komponenten, wie z.B. der Brüheinheit oder der Zentraleinheit, erreicht werden kann.

Das Prinzip der Erfindung wird im Folgenden anhand einer Zeichnung beispielshalber noch näher erläutert. In der Zeichnung zeigen:
- Figur 1:: Ein schematisches Beispiel für einen Heißgetränkeautomaten.
- Figur 2:: Ein Blockschaltbild zum Ablauf eines erfindungsgemäßen Verfahrens,
- Figur 3:: Ein Beispiel für einen Verlauf der Temperatur während der Zubereitung eines Heißgetränks.
- Figur 4:: Ein weiteres Beispiel für einen Verlauf der Temperatur während der Zubereitung eines Heißgetränks.

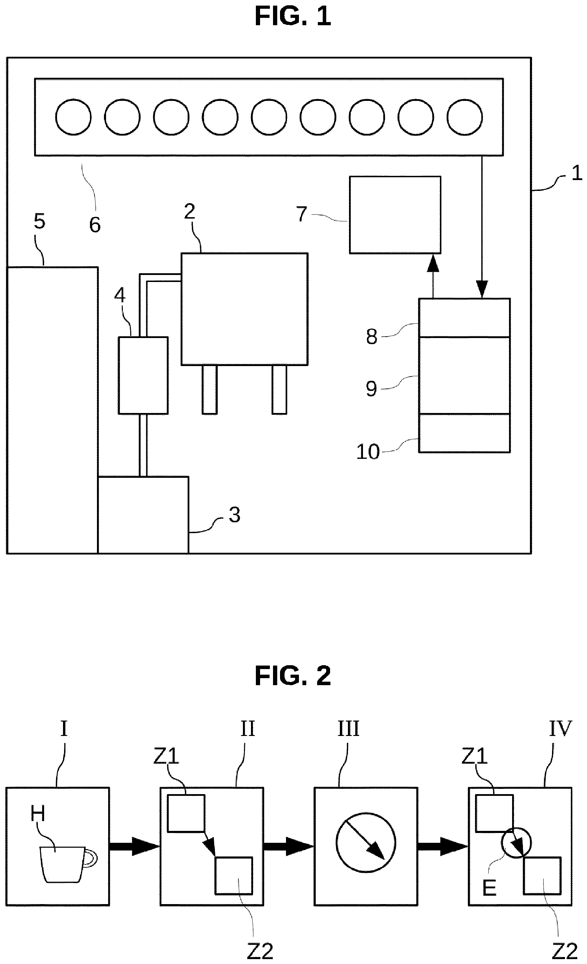

Figur 1 zeigt ein Beispiel für einen Heißgetränkeautomaten 1 einen Kaffeevollautomat. Er umfasst neben anderen zur Zubereitung von Kaffee erforderlichen Einheiten insbesondere die folgenden Komponenten:
- Eine Brüheinheit 2, in die zur Zubereitung Kaffeepulver gegeben wird, welches ggf. mittels eines hier nicht dargestellten Mahlwerks gemahlen wird.
- Einen Durchlauferhitzer als Heizelement 4 zum Aufheizen von Wasser,
- Eine Pumpe 3, durch die Wasser aus einem Wassertank 5 durch den Durchlauferhitzer hindurch in die Brüheinheit 2 gepumpt wird.
- Eine Auswahleinheit 6 zur bedienerseitigen manuellen Auswahl und Angabe eines gewünschten Heißgetränketyps H.
- Eine Steuereinrichtung 7 ausgelegt zur Steuerung der Zubereitung eines Kaffeegetränks des ausgewählten Heißgetränketyps H durch den Heißgetränkeautomaten 1.
- Eine Datenschnittstelle 8 zur Herstellung eines Datenkontakts mit der Auswahleinheit 6. Dadurch können Daten zur Auswahl des Heißgetränketyps H an eine Recheneinheit 9 weitergegeben werden. Der Pfeil von der Auswahleinheit 6 zur Datenschnittstelle 8 soll dabei die Richtung des Datenflusses andeuten. Diese Datenschnittstelle 8 ist dabei auch zum Senden von Steuerdaten (s. zweiter Pfeil) an eine Steuereinrichtung 7 zur Steuerung einer Zubereitung eines Kaffeegetränks des ausgewählten Heißgetränketyps H durch den Heißgetränkeautomaten 1 ausgelegt.
- Die Recheneinheit 9 ausgelegt zur Berechnung von Steuerdaten für die Steuereinrichtung 7.
- Einen Datenspeicher 10 zur Speicherung von vorgegebenen Übergangsprozeduren P, die von der Recheneinheit abgerufen werden können. Die Übergangsprozeduren P können völlig festgelegte Abläufe darstellen, sie können aber auch nur einen zeitlichen Ablauf mit Änderungen von Parametern darstellen, deren Werte dynamisch gemäß Messwerten von Sensoren des Heißgetränkeautomaten angepasst werden. Beispielsweise kann eine Übergangsprozedur P einfach eine Temperaturänderung von einer aktuell gemessenen Temperatur auf eine vorgegebenen Zieltemperatur darstellen. Sie kann aber auch weitere Parameter wie z.B. zur Pumpleistung, zu Ventilstellungen oder ähnlichem umfassen.

Zur Zubereitung eines Kaffeegetränks wird Wasser aus dem Wassertank 5 mittels der Pumpe 3 durch das Heizelement 4 gepumpt, dort erhitzt und gelangt im heißen Zustand in die Brüheinheit 2 in der sich Kaffeepulver befindet. Dieser Vorgang wird mittels der Recheneinheit 9 über die Datenschnittstelle 8 auf im Folgenden beschriebene Weise gesteuert:
Figur 2 zeigt ein Blockschaltbild zum Ablauf eines erfindungsgemäßen Verfahrens zur Steuerung des Heißgetränkeautomaten 1 (Figur 1).

In Schritt I erfolgt eine benutzerseitige Auswahl eines Heißgetränketyps H, z.B. mittels Wahltasten am Heißgetränkeautomaten 4. Sie setzt den Startpunkt des erfindungsgemäßen Verfahrens.

In Schritt II erfolgt eine Ermittlung der Reihenfolge und Art der Zubereitungsschritte Z1, Z2, die zur Zubereitung eines ausgewählten Heißgetränks benötigt werden, wobei bevorzugt auch Zubereitungsschritte Z2 bekannter nachfolgenden Zubereitungen ermittelt werden, z.B. wenn bekannt ist, dass zwei Espressi hintereinander gebrüht werden sollen.

In Schritt III wird eine Übergangsprozedur P ermittelt, die den Übergang zwischen dem aktuellen Zubereitungsschritt Z1 und dem nachfolgenden Zubereitungsschritt Z2 optimal gestaltet. Diese Übergangsprozedur P kann hier z.B. aus einer vorbestimmten Menge von Übergangsprozeduren P in Abhängigkeit der Temperaturen am Ende des aktuellen Zubereitungsschritts Z1 und der benötigten Temperatur am Anfang des nachfolgenden Zubereitungsschritts Z2 ausgewählt werden. Die Übergangsprozedur P kann aber auch basierend auf den vorgenannten Temperaturen dynamisch berechnet werden. Beispielsweise kann berechnet werden, wie lange das Heizelement laufen müsste, damit die Temperatur des Wassers auf die nachfolgend benötigte Temperatur erhitzt werden kann.

In Schritt IV wird das Heißgetränk zubereitet, in dem zwischen den Zubereitungsschritten Z1, Z2 die Übergangsprozedur P eingefügt wird. Dies kann nur bei zwei Zubereitungsschritten Z1, Z2 geschehen, es kann aber auch mehrfach innerhalb einer Zubereitung geschehen.

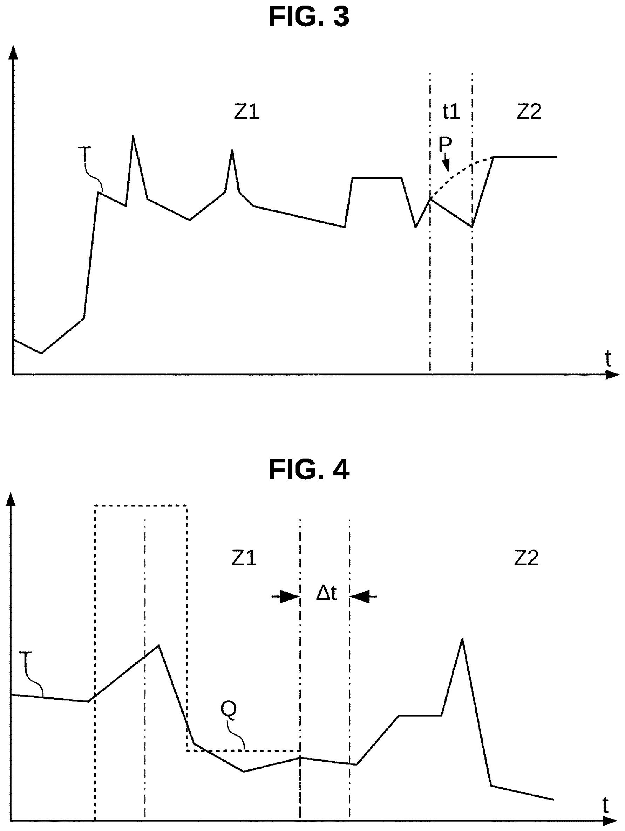

Figur 3 zeigt ein Beispiel für einen Verlauf der Temperatur während der Zubereitung eines Heißgetränks in Form einer Temperaturkurve T des Wassers. Die strichpunktierten Linien begrenzen einen Zeitraum t1, welcher zwischen zwei Zubereitungsschritten Z1, Z2 liegt. Vor dem Zeitraum t1 wurde am Ende eines ersten Zubereitungsschritts Z1 Wasser erhitzt, müsste jedoch am Anfang des zweiten Zubereitungsschritts Z2 eine höhere Temperatur haben. Leider passiert hier nichts (Stand der Technik) und das Wasser kühlt sich ab, was man in der sinkenden Temperaturkurve in dem Zeitraum t1 sieht. Möglicherweise verdampft auch Wasser aus der Leitung vom Heizelement 4 zur Brüheinheit 2. Die gestrichelte Linie stellt einen Temperaturverlauf dar, welcher mittels einer Übergangsprozedur P im Rahmen der Erfindung erreicht werden könnte. Möglicherweise gehört auch ein Pumpen einer bestimmten Wassermenge zu der Übergangsprozedur P, so dass verdampftes Wasser ersetzt werden könnte. Somit würde sich der Heißgetränkeautomat vor dem Zubereitungsschritt Z2 wieder in einem definierten Zustand befinden.

Figur 4 zeigt ein weiteres Beispiel für einen Verlauf der Temperatur während der Zubereitung eines Heißgetränks in Form einer Temperaturkurve T des Wassers und einer Heizleistungskurve Q (gestrichelt). Zu sehen ist ein Teil der Zubereitung, während der das Heißgetränk in eine Tasse abgefüllt wird (strichpunktiert markierter Bereich). Bei der Abfüllung ist die Heizleistung zunächst hoch, fällt nach einer Zeit jedoch ab, um danach auf Null abzusinken. Dies geschieht noch während das Heißgetränk in die Tasse abgefüllt wird, da die notwendige Wärme dem System entzogen werden kann und diese nicht mehr unbedingt zugeführt werden muss. Diese Heater-Early-Off-Time Δt, also die Zeit eines vorzeitigen Ausschaltens des Heizelements, kann durch eine Übergangsprozedur P passend, z.B. durch Anpassung der Stärke der Heizleistung oder der zeitlichen Länge der Applikation von Wärmeenergie) optimal an den nachfolgenden Zubereitungsschritt Z2 angepasst werden. Es sollte beachtet werden, dass die Schwankungen der Temperaturkurve durch die Förderung des Wassers beeinflusst wird, Fließt viel Wasser kann die Temperatur trotz hoher Heizleistung sinken, fließt das Wasser langsam, kann es sich trotz geringer Heizleistung durch Restwärme im System aufwärmen.

Da es sich bei der vorhergehenden, detailliert beschriebenen Ausführungsform um ein Beispiel handelt, kann es in üblicher Weise vom Fachmann in einem weiten Umfang modifiziert werden, ohne den Bereich der Erfindung zu verlassen. Insbesondere können auch die konkreten Ausgestaltungen in anderer Form als in der hier beschriebenen folgen. Ebenso kann der Heißgetränkeautomat in einer anderen Form ausgestaltet werden, wenn dies aus Platzgründen bzw. gestalterischen Gründen notwendig ist. Beispielsweise kann er neben Kaffee auch Heißwasser oder Dampf erzeugen. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Heißgetränkeautomat
- 2: Brühkammer
- 3: Pumpe
- 4: Heizelement
- 5: Wassertank
- 6: Auswahleinheit
- 7: Steuereinrichtung
- 8: Datenschnittstelle
- 9: Recheneinheit
- 10: Datenspeicher

- H: Heißgetränketyp
- P: Übergangsprozedur
- Q: Heizleistungskurve
- T: Temperaturkurve
- t1: Zeitraum
- Δt: "Heater-Early-Off-Time"
- Z1, Z2: Zubereitungsschritt

## Patentansprüche

1. Verfahren zur Steuerung eines Heißgetränkeautomaten (1), umfassend die Schritte:
- Auswahl eines Heißgetränketyps (H),
- Zubereitung eines Heißgetränks basierend auf dieser Auswahl,
wobei vor oder während eines aktuellen Zubereitungsschritts (Z1) basierend auf der Auswahl ermittelt wird, welches der nachfolgende Zubereitungsschritt (Z2) sein wird und der aktuelle Zubereitungsschritt (Z1) mit einer Übergangsprozedur (P) beendet wird, die basierend auf dem nachfolgenden Zubereitungsschritt (Z2) ermittelt wird.

2. Verfahren nach Anspruch 1, **dadurch gekennzeichnet, dass** die Übergangsprozedur (P) eine Anzahl von Verfahrensschritten zur Änderung von Parameterwerten von Parametern zur Steuerung des Heißgetränkeautomaten (H) umfasst, wobei die Parameterwerte dieser Parameter vorbestimmt sind oder dynamisch basierend auf dem nachfolgenden Zubereitungsschritt und/oder basierend auf Messwerten von Sensoren des Heißgetränkeautomaten (1) berechnet werden,
wobei die Übergangsprozedur (P) bevorzugt aus einer Anzahl von Übergangsprozeduren (P) mit vorgegebenen Abläufen von Änderungen von Parameterwerten ausgewählt wird.

3. Verfahren nach einem der vorangehenden Ansprüche, **dadurch gekennzeichnet, dass** eine Übergangsprozedur (P) Parameter der Gruppe Temperatur, Leistung eines Heizelements, Leistung einer Pumpe, Fördervolumen einer Flüssigkeit, Ventilstellungen, Stellung eines mechanischen Schaltelements, Steuerung von Bewegungselementen, "Heater-Early-Off-Time" und Messwertanforderungen von Sensoren umfasst.

4. Verfahren nach einem der vorangehenden Ansprüche, **dadurch gekennzeichnet, dass** Übergangsprozeduren (P) für aufeinander folgende Zubereitungsschritte (Z1, Z2) zur Verfügung stehen,
- welche unterschiedliche Brühschritte und/oder
- einen Brühschritt gefolgt von einer Heißwasser- oder Dampfzubereitung und/oder - eine Heißwasser- oder Dampfzubereitung gefolgt von einem Brühschritt und/oder
- den Abschluss einer Zubereitung
darstellen.

5. Verfahren nach einem der vorangehenden Ansprüche, **dadurch gekennzeichnet, dass** eine Übergangsprozedur (P) Parameterwerte zur Steuerung eines mechanischen Schaltelements umfasst, insbesondere eines Zahnrads, welches zur Durchführung mechanischer und/oder elektrischer Schaltvorgänge im Heißgetränkeautomaten (1) angesteuert wird.

6. Heißgetränkeautomat (1), umfassend:
- eine Auswahleinheit (6) ausgelegt zur benutzerseitigen Auswahl eines Heißgetränketyps (H),
- eine Ermittlungseinheit, die dazu ausgelegt ist, vor oder während eines aktuellen Zubereitungsschritts (Z1) basierend auf der Auswahl zu ermitteln, welches der nachfolgende Zubereitungsschritt (Z2) sein wird, und eine Übergangsprozedur (P) basierend auf dem nachfolgenden Zubereitungsschritt (Z2) zu ermitteln,
- eine Steuereinrichtung (7) ausgelegt zur Steuerung der Zubereitung von Heißgetränken basierend auf der Auswahl, die dazu ausgelegt ist, einen aktuellen Zubereitungsschritt (Z1) mit der ermittelten Übergangsprozedur zu beenden.

7. Heißgetränkeautomat (1) nach Anspruch 6, **gekennzeichnet durch,** einen Datenspeicher (10), der Daten zu einer Anzahl von Übergangsprozeduren (P) mit vorgegebenen Parametern und bevorzugt vorbestimmte Parameterwerte zu einer Anzahl dieser Übergangsprozeduren (P) umfasst.

8. Heißgetränkeautomat (1) nach Anspruch 6 oder 7, **gekennzeichnet durch,** eine Recheneinheit (9), die dazu ausgelegt ist, eine Übergangsprozedur (P) in Abhängigkeit eines aktuellen Zubereitungsschritts (Z1) und eines nachfolgenden Zubereitungsschritts (Z2) zu ermitteln und bevorzugt Parameterwerte der ermittelten Übergangsprozedur in Abhängigkeit von Messwerten von Sensoren des Heißgetänkeautomaten (1) dynamisch anzupassen.

9. Heißgetränkeautomat (1), **dadurch gekennzeichnet, dass** er zur Ausführung eines Verfahrens nach einem der Ansprüche 1 bis 5 ausgelegt ist.

10. Heißgetränkeautomat (1), **dadurch gekennzeichnet, dass** er als Kaffeevollautomat mit einem Durchlauferhitzer ausgestaltet ist.
